# EUROPÄISCHE PATENTANMELDUNG

(11) **EP 2 604 998 A1**
(43) Veröffentlichungstag der Anmeldung: **19.06.2013**
(21) Anmeldenummer: 11193064.0
(22) Anmeldetag: 12.12.2011
(51) Int. Cl.: G01N 21/17, G01N 21/35, G01N 21/37

(54) **Vorrichtung zur Gasanalyse**

(71) Anmelder: ABB Research Ltd., 8050 Zürich (CH)
(72) Erfinder: Maret, Yannick, 5405 Dättwil (CH); Steiger, Olivier, 8032 Zürich (CH); Angelosante, Daniele, 5400 Baden (CH); Rüdiger, Werner, 64367 Mühltal (DE); Rathke, Carsten, 61137 Schöneck (DE)
(74) Vertreter: Schmidt, Karl Michael

(57) **Zusammenfassung**

Es sind eine Vorrichtung und ein Verfahren zum Messen der Konzentration eines Gases in einem Gasgemisch angegeben, wobei die Konzentrationsmessung mittels Druckschwankungen in einem Detektor erfolgt. Die erfindungsgemäße Vorrichtung und das Verfahren sind dadurch gekennzeichnet, dass ein externes Störsignal bzw. eine Störvibration, welche sich auf die Druckschwankungen in dem Detektor auswirken und damit einen Messwert bzw. ein Messsignal verfälschen können, erfasst werden und deren Auswirkungen auf die Druckschwankungen in dem Detektor ermittelt werden, so dass die Druckschwankungen, welche von dem Störsignal verursacht sind, aus dem Messsignal extrahiert werden können und ein unverfälschter Messwert bereitgestellt werden kann.

## Beschreibung

### GEBIET DER ERFINDUNG

Die Erfindung betrifft eine Vorrichtung zur Analyse von Gasen und Gasgemischen sowie eine Vorrichtung zur Gaskonzentrationsmessung. Insbesondere betrifft die Erfindung eine Gaskonzentrationsmessvorrichtung zur Bestimmung der Konzentration eines Gases in einem Gasgemisch, das sich z. B. in einer Messkammer befinden kann. Weiterhin betrifft die Erfindung ein Verfahren zum Messen einer Gaskonzentration eines Gases in einem Gasgemisch.

### TECHNISCHER HINTERGRUND DER ERFINDUNG

Gaskonzentrationsmessvorrichtungen und Gasanalysatoren werden eingesetzt, um ein Gasgemisch auf seine einzelnen Bestandteile hin zu untersuchen. Dabei kann das Gasgemisch insbesondere auf den Gehalt eines einzelnen Stoffes bzw. chemischen Elementes hin untersucht werden. Bei der zu messenden Gaskonzentration kann es sich beispielsweise um den Sauerstoffgehalt, den Kohlenstoffmonoxydgehalt oder den Kohlenstoffdioxydgehalt eines Gasgemisches handeln.

Zur Bestimmung der Gaskonzentration werden dabei typischerweise ein Referenzgas, dessen Einzelbestandteile und deren mengenmäßiges Vorkommen in dem Referenzgas bekannt sind, und das zu messende Gasgemisch einer energetischen Strahlung, beispielsweise Infrarotlicht, abwechselnd ausgesetzt. Dabei ist die Frequenz des Infrarotlichtes so auf das zu messende Gas, d.h. auf das zu detektierende Element in dem Gasgemisch, abgestimmt, dass die bzw. das zu messende Element des Gasgemisches die Infrarotstrahlung absorbiert und die Infrarotstrahlung damit ein gewisses Maß an Energie abgibt, wenn sie das zu untersuchende Gasgemisch passiert, wobei das Maß an absorbierter Energie dem Gehalt des zu messenden Elementes in dem Gasgemisch entspricht.

Die Referenzkammer mit dem Referenzgas und die Messkammer mit dem zu messenden Gasgemisch sind dabei so angeordnet, dass sie abwechselnd von der Strahlungsquelle, d. h. der Infrarotlichtquelle, bestrahlt werden und dass die Infrarotstrahlung die Referenzkammer und die Messkammer passiert und auf einen Detektor trifft, welcher Detektor ein Detektorgas beinhaltet bzw. aufweist. Da die Referenzkammer und die Messkammer bei unterschiedlicher chemischer Zusammensetzung ein unterschiedliches Maß an Infrarotlichtstrahlung zu dem Detektor mit dem Detektorgas passieren lassen, schwankt das Maß an Strahlung, welches in dem Detektor ankommt in Abhängigkeit davon, ob die Referenzkammer oder die Messkammer abgeblendet ist bzw. von der Infrarotstrahlung passiert wird.

In der Regel strahlt die Infrarotlichtquelle mit gleicher Intensität und ist ausgeführt, sowohl Messkammer als auch Referenzkammer zu bestrahlen. Typischerweise wird ein Zerhacker oder ein Blendenrad eingesetzt, um jeweils Messkammer oder Referenzkammer so abzublenden bzw. Strahlung in die Kammern durchzulassen, dass nur jeweils eine Kammer von der Infrarotlichtquelle bestrahlt wird. Dabei rotiert das Blendenrad, so dass die Kammern abwechselnd bestrahlt bzw. abgeblendet werden.

Das Detektorgas weist eine solche chemische Zusammensetzung auf, dass es die verwendete Infrarotlichtstrahlung absorbiert, d. h. dass in Abhängigkeit der ankommenden Strahlungsenergie mehr bzw. weniger Energie von dem Detektorgas absorbiert wird. In Abhängigkeit der in der Referenzkammer bzw. Messkammer absorbierten Infrarotstrahlung nimmt das Detektorgas dann mehr oder weniger Energie aus der ankommenden Infrarotlichtstrahlung auf, so dass sich die Temperatur und die herrschenden Druckverhältnisse in dem Detektorgas jeweils erhöhen oder absinken. Nimmt die Infrarotlichtstrahlung, welche von dem Detektorgas absorbiert wird bzw. welche durch die Messkammer bzw. Referenzkammer bei dem Detektor und dem Detektorgas ankommt, ab, so werden die Temperatur und der Druck in dem Detektorgas jeweils reduziert.

Ist das Maß an Energie, welches in der Referenzkammer von dem Referenzgas bzw. in der Messkammer von dem zu messenden Gasgemisch absorbiert wird, unterschiedlich, bedeutet dies, dass die Energie, welche bei dem Detektor bzw. dem Detektorgas ankommt, ebenfalls schwankt, und zwar entsprechend einem Vorgang der wechselseitigen Abblendung der Referenzkammer und der Messkammer. Dies bedeutet, dass die Temperatur und der Druck in dem Detektorgas entsprechend dem Abblenden der Referenzkammer und der Messkammer schwanken, wodurch sich ein Pulsieren des Detektorgases in dem Detektor ergibt, d. h. dass die Druckverhältnisse entsprechend dem Abblendungsvorgang steigen und fallen.

Aus der Druckänderung des Detektorgases in dem Detektor kann auf die Differenz der Strahlungsenergie, welche die Referenzkammer und die Messkammer durchdringt, geschlossen werden. Da die Zusammensetzung des Referenzgases und damit auch die von dem Referenzgas absorbierte Strahlungsenergie bekannt ist, kann mit Hilfe der Energiedifferenz der Strahlungsenergie, welche von dem Detektor erfasst wird, auf diejenige Energie geschlossen werden, welche von dem Gasgemisch in der Messkammer absorbiert wird. Daraus kann wiederum auf die Konzentration des zu messenden Gases in dem Gasgemisch in der Messkammer geschlossen werden.

Das Referenzgas kann aber auch eine hinsichtlich seiner Einzelbestandteile unbekannte Zusammensetzung aufweisen. Dann wird der Einfluss des Gasgemisches auf das Messsignal durch Kalibration bestimmt, indem mehrere Gasgemische mit bekannter Gaskonzentration nacheinander in die Messkammer eingeführt und die entsprechenden Messsignale in einem Kalibrationsschritt erfasst werden. Bei Messung der Gaskonzentration eines Gasgemisches mit unbekannter Konzentration wird die Gaskonzentration durch Bezugnahme auf die Kalibration ermittelt.

Dieses allgemeine Prinzip der Gaskonzentrationsmessung bzw. Gasanalyse wird beispielsweise in der EP 1 847 827 A1 beschrieben.

Die Messung der Druckänderung des Detektorgases in dem Detektor kann beispielsweise dadurch erfolgen, dass die Infrarotlichtstrahlung, welche abwechselnd die Referenzkammer und die Messkammer durchläuft, in dem Detektor nacheinander zwei Detektorkammern durchläuft, wobei die erste Detektorkammer aus der ankommenden Infrarotlichtstrahlung naturgemäß ein höheres Maß an Energie absorbiert, als das Detektorgas in der zweiten Detektorkammer, bei welchem bereits eine durch die erste Detektorkammer reduzierende Energiestrahlung ankommt. Somit kann die Druckdifferenz zwischen der ersten Detektorkammer und der zweiten Detektorkammer, welche typischerweise mit einem hinsichtlich der chemischen Zusammensetzung identischen Detektorgas gefüllt sind, als Maß für die in dem Detektor ankommende Energie genutzt werden.

Die Druckdifferenz zwischen der ersten Detektorkammer und der zweiten Detektorkammer kann beispielsweise dadurch ermittelt werden, dass die erste Detektorkammer von der zweiten Detektorkammer mit einer Membran getrennt ist, welche Membran so ausgeführt ist, dass die Schwingungen der Membran aufgrund der unterschiedlichen Druckverhältnisse in der ersten Detektorkammer und der zweiten Detektorkammer erfasst werden können. Die Membranschwingungen können dabei mittels dem Prinzip der Mikrofonie erfasst werden, d. h. dass die Membranschwingungen aufgrund einer Abstandsänderung von einem Referenzpunkt, beispielsweise einem Punkt an dem Gehäuse des Detektors, aufgrund der Änderung eines kapazitiven Wertes erfasst werden. Dabei kann eine Anode oder eine Kathode der Kapazität an der Membran, welche sich aufgrund der schwankenden Druckverhältnisse bewegt, angebracht werden, wobei sich der Kapazitätswert der Kapazität aufgrund der Bewegung der Membran, d. h. der Membranschwingungen, ändert und somit eben diese Membranschwingungen erfasst werden können.

Der Druckunterschied und somit das unterschiedliche Maß an absorbierter Energie in der ersten Detektorkammer und in der zweiten Detektorkammer kann beispielsweise auch dadurch erfasst werden, dass an einer Strömungsöffnung, welche die erste Detektorkammer mit der zweiten Detektorkammer verbindet, ein Strömungsmesser angebracht wird und somit die Menge des Gases gemessen wird, welche aufgrund des höheren Druckes in der ersten Detektorkammer in die zweite Detektorkammer strömt, da der Druck in der zweiten Detektorkammer niedriger ist.

### ZUSAMMENFASSUNG DER ERFINDUNG

Es kann als eine Aufgabe der Erfindung angesehen werden, eine Gaskonzentrationsmessvorrichtung anzugeben, deren Messgenauigkeit sich durch eine verringerte Anfälligkeit gegen externe Störsignale auszeichnet.

Das Messsignal, welches zur Ermittlung der Gaskonzentration benutzt wird, ergibt sich aus einer Messung der Druckänderung zwischen einer ersten Detektorkammer und einer zweiten Detektorkammer, beispielsweise mittels einer Schwingung einer Membran, welche die erste Detektorkammer von der zweiten Detektorkammer trennt, oder mittels einer Gasströmung, welche sich aus einem Druckunterschied zwischen der ersten Detektorkammer und der zweiten Detektorkammer ergibt. Es sind also Membranschwingungen bzw. Massenflüsse durch eine Strömungsöffnung, welche letztendlich das Messsignal ergeben. Dies macht die Messung anfällig gegen externe Störsignale, welche an der Gaskonzentrationsmessvorrichtung anliegen. Bei den externen Störsignalen kann es sich beispielsweise um Bewegungen der Gaskonzentrationsmessvorrichtung handeln oder aber auch Schwingungen, welche an dem Einsatzort der Gaskonzentrationsmessvorrichtung auftreten, beispielsweise in bzw. an einem Fahrzeug durch Vibrationen des Fahrzeugs verursacht, z. B. durch einen laufenden oder startenden Antrieb des Fahrzeugs oder während einer Bewegung bzw. Fahrt des Fahrzeugs.

Es sind eine Gaskonzentrationsmessvorrichtung und ein Verfahren zum Messen einer Gaskonzentration eines Gases in einem Gasgemisch gemäß den Merkmalen der unabhängigen Patentansprüche angegeben. Weiterbildungen der Erfindung ergeben sich aus den Unteransprüchen und aus der folgenden Beschreibung.

Viele der im Folgenden im Hinblick auf die Gaskonzentrationsmessvorrichtung beschriebenen Merkmale lassen sich auch als Verfahrensschritte implementieren und umgekehrt.

Gemäß einem ersten Aspekt der Erfindung ist eine Gaskonzentrationsmessvorrichtung angegeben, welche eine Auswerteeinheit und einen Detektor mit einer ersten Detektorkammer und einer zweiten Detektorkammer aufweist, wobei die erste Detektorkammer und die zweite Detektorkammer mit einem Detektorgas gefüllt sind. Dabei ist ein Druckausgleich bzw. ein Druckausgleichsverlauf aufgrund eines Druckunterschieds des Detektorgases zwischen der ersten Detektorkammer und der zweiten Detektorkammer ein Maß für eine Konzentration eines Gases in einem Gasgemisch. Die Gaskonzentrationsmessvorrichtung ist dadurch gekennzeichnet, dass sie einen Beschleunigungssensor aufweist, welcher Beschleunigungssensor ausgeführt ist, eine Störvibration der Gaskonzentrationsmessvorrichtung zu erfassen, wobei die Auswerteeinheit ausgeführt ist, einen Druckausgleichsverlauf zwischen der ersten Detektorkammer und der zweiten Detektorkammer ohne Einwirkung der Störvibration auf die Gaskonzentrationsmessvorrichtung und ohne eine von der Störvibration verursachte Störschwingung des Druckausgleichsverlaufs zu ermitteln.

Die Gaskonzentrationsmessvorrichtung dient der Bestimmung der Konzentration eines Gases bzw. eines chemischen Elementes oder eines sonstigen Stoffes in einem Gasgemisch, das sich z. B. in einer Messkammer befinden kann. Insbesondere dient die Gaskonzentrationsmessvorrichtung der Bestimmung der Konzentration eines gasförmigen Stoffes, welcher in dem Gasgemisch enthalten ist.

Die Störvibration entspricht einer Bewegung der Gaskonzentrationsmessvorrichtung, welche durch ein externes Störsignal, das auf die Gaskonzentrationsmessvorrichtung einwirkt, hervorgerufen wird. Das Störsignal kann sich beispielsweise in einem Fahrzeug durch das Anlassen eines Motors oder das Verändern der Drehzahl eines Motors oder allgemein aus Einwirkungen der Einsatzumgebung der Gaskonzentrationsmessvorrichtung auf die Gaskonzentrationsmessvorrichtung ergeben.

Das externe Störsignal, welches auf die Gaskonzentrationsmessvorrichtung wirkt, verursacht in dieser eine Störvibration. Die Störvibration der Gaskonzentrationsmessvorrichtung wiederum wirkt sich auf den Druckausgleich bzw. den Druckausgleichsverlauf zwischen der ersten Detektorkammer und der zweiten Detektorkammer aus. Die Störvibration verursacht Bewegungen der Gaskonzentrationsmessvorrichtung, wobei diese Bewegungen zu einer Veränderung des Druckausgleichsverlaufs zwischen der ersten Detektorkammer und der zweiten Detektorkammer führen, beispielsweise aufgrund der Massenträgheit des Detektorgases oder der mechanischen Kopplung der Membran mit der Gaskonzentrationsmessvorrichtung bzw. dem Detektor, womit beispielsweise die Detektorgasströmung von der ersten Detektorkammer in die zweite Detektorkammer bzw. die Membranschwingung beeinflusst wird.

Damit führt eine Störvibration der Gaskonzentrationsmessvorrichtung dazu, dass ein Druckausgleichsverlauf, welcher ein Maß für die zu messende Gaskonzentration ist, zu einem Messfehler führt. Eine Messung der Strömungsmenge des Gases im Zuge des Druckausgleichs in der ersten Detektorkammer und der zweiten Detektorkammer vermag nicht zu unterscheiden zwischen dem Druckausgleich, welcher bedingt ist durch die Energieaufnahme des Detektorgases aus der Infrarotlichtstrahlung und demjenigen Druckausgleich, welcher durch die von dem externen Störsignal verursachte Störvibration der Gaskonzentrationsmessvorrichtung bedingt ist.

Der gemessene Druckausgleichsverlauf zwischen der ersten Detektorkammer und der zweiten Detektorkammer besteht somit aus einem Nutzwert und einem Messfehler, wobei der Messfehler ohne Kenntnis der Störvibration an der Gaskonzentrationsmessvorrichtung nicht ermittelt werden kann.

Der an der Gaskonzentrationsmessvorrichtung angeordnete Beschleunigungssensor ermöglicht die Bestimmung eben dieses Messfehlers dadurch, dass die an der Gaskonzentrationsmessvorrichtung anliegende Störvibration erfasst wird und es damit ermöglicht wird, aus dem gemessenen Druckausgleichsverlauf den Beitrag der Störvibration, d. h. den Messfehler, herauszurechnen, so dass letztlich derjenige Druckausgleichsverlauf ermittelt werden kann, welcher lediglich durch das unterschiedliche Maß an aufgenommener Energie aus der Infrarotlichtstrahlung bedingt ist.

Die Erfindung ist nicht auf die Verwendung eines Beschleunigungssensors beschränkt. An Stelle des Beschleunigungssensors kann jede beliebige Vorrichtung oder jedes beliebige Mittel genutzt werden, welche bzw. welches geeignet ist, eine Vibration bzw. mechanische Bewegung der Gaskonzentrationsmessvorrichtung zu erfassen.

Damit wird als Ergebnis der Messung der Gaskonzentration ein Druckausgleichsverlauf zur Verfügung gestellt, welcher von einem Einfluss eines externen Störsignals, welches eine Störvibration der Gaskonzentrationsmessvorrichtung hervorruft, auf den Druckausgleichsverlauf befreit ist, d. h. dass die Gaskonzentrationsmessung von einem Messfehler bzw. von einer Störung der Messung bzw. des Messsignals befreit ist oder wobei der Messfehler bzw. die Störung der Messung reduziert ist.

Es sei darauf hingewiesen, dass im Zusammenhang mit der Erfindung schon das Reduzieren eines Störsignals in dem Messsignal eine deutlich verbesserte Signalerfassung und Gaskonzentrationsmessung ermöglicht, so dass auch im Fall der Reduzierung des Störsignaleinflusses von einer Befreiung des Messsignals, d.h. des gemessenen Druckausgleichsverlaufs, von einem Störsignal bzw. von einer unverfälschten Wiedergabe gesprochen wird.

Gemäß einer Ausführungsform der Erfindung ist die erste Detektorkammer mittels einer Membran von der zweiten Detektorkammer getrennt und eine Membranschwingung, welche sich durch eine Druckänderung des Detektorgases in der ersten Detektorkammer und/oder der zweiten Detektorkammer ergibt, von dem Druckausgleichsverlauf verursacht wird beziehungsweise dem Druckausgleichsverlauf entspricht. Dabei ergibt sich die Membranschwingung durch eine Druckänderung des Detektorgases in der ersten Detektorkammer relativ zu dem Druck in der zweiten Detektorkammer und gibt die Konzentration des Gases in dem Gasgemisch an. Dabei ist der Beschleunigungssensor ausgeführt die Störvibration zu erfassen, so dass die Membranschwingung ohne die Störschwingung ermittelt werden kann.

Die Membranschwingung kann dabei beispielsweise mittels des Prinzips der Mikrofonie erfasst werden. Hierbei kann die Schwingung der Membran dadurch erkannt werden, dass beispielsweise eine Kapazität und deren sich ändernder kapazitiver Wert auf Grund der Bewegung der Membran als Indikator für die Membranschwingung herangezogen wird.

Die Erfindung ist nicht auf die Verwendung des Prinzips der Mikrofonie zur Erkennung der Membranschwingung beschränkt. Es können sämtliche anderen Mittel verwendet werden, welche geeignet sind, eine Membranschwingung zu erfassen, wie z.B. Dehnungsmessstreifen an der Membran oder optische Erfassung.

Maßgeblich für die Bestimmung der Druckänderung bzw. des Druckunterschiedes zwischen der ersten Detektorkammer und der zweiten Detektorkammer sind die Membranschwingungen. Die Membranschwingung ergibt sich dadurch, dass die Referenzkammer und die Messkammer abwechselnd von der Infrarotlichtquelle bzw. energetischen Strahlungsquelle durchstrahlt werden und somit das Maß an Energie, welches in der ersten Detektorkammer und in der zweiten Detektorkammer ankommt, schwankt.

Es sei darauf hingewiesen, dass unabhängig von dem Verfahren zur Ermittlung der Membranschwingung ein prinzipieller Messfehler verursacht durch ein externes Störsignal bzw. eine Störvibration der Gaskonzentrationsmessvorrichtung nicht vermieden werden kann, da das Störsignal auf die Membranschwingung an sich wirkt und somit der Messfehler inhärenter Bestandteil der Membranschwingung ist. Zum Eliminieren des Messfehlers muss damit der Einfluss des Störsignals bzw. der Störvibration auf die Membranschwingung ermittelt werden, was der Beschleunigungssensor wie oben und im Folgenden beschrieben ermöglicht.

Die Membranschwingung setzt sich damit zusammen aus einer sog. Nutzschwingung und einer sog. Störschwingung.

Die Nutzschwingung wird dabei verursacht durch die Druckänderung in der ersten Detektorkammer und der zweiten Detektorkammer und die Störschwingung wird verursacht durch die Störvibration der Gaskonzentrationsmessvorrichtung, welche Störvibration wiederum von dem externen Störsignal verursacht wird.

Gemäß einer Ausführungsform der Erfindung ist der Beschleunigungssensor an dem Detektor angeordnet.

Grundsätzlich kann der Beschleunigungssensor an **einer beliebigen Stelle der** Gaskonzentrationsmessvorrichtung angeordnet sein. Die Anordnung des Beschleunigungssensors an dem Detektor kann die Messgenauigkeit bzw. die Genauigkeit der Bestimmung des Messfehlers, d. h. der Störschwingung in der Membran, bzw. in dem Druckausgleichsverlauf dabei dadurch verbessern, dass der Beschleunigungssensor in der Umgebung bzw. der Nähe des Messortes, d. h. der Membran bzw. der Strömungsöffnung, angebracht wird, da sich das Störsignal bzw. die Störvibration in Abhängigkeit des Aufbaus der Gaskonzentrationsmessvorrichtung an unterschiedlichen Stellen unterschiedlich auswirken kann. Typischerweise wirkt sich die Störvibration, welche an dem **Detektor anliegt, stärker auf den Druckausgleichsverlauf bzw. die** Membranschwingung aus.

In anderen Worten bedeutet dies, dass eine genauere Bestimmung der Störvibration, welche an der Membran bzw. der Strömungsöffnung anliegt, eine genauere Bestimmung der Störschwingung bzw. des Messfehlers erlaubt, was wiederum eine genauere Bestimmung der Nutzschwingung der Membran bzw. des Nutzwertes des Druckausgleichsverlaufs ermöglicht.

Es sei darauf hingewiesen, dass die Begriffe Membranschwingung und Druckausgleichsverlauf oben und im Folgenden analog verwendet werden. Dies bedeutet, dass die Beschreibung einer Ausführungsform, welche sich auf die Membranschwingung bezieht, analog auf den allgemeinen Druckausgleichsverlauf gelesen werden kann.

**Gemäß einer Ausführungsform der Erfindung weist die** Gaskonzentrationsmessvorrichtung weiterhin eine Auswerteeinheit auf, welche den Druckausgleichsverlauf bzw. die Membranschwingung ermittelt und die Störschwingung hierin erkennt, wobei die Auswerteeinheit die Störschwingung mittels einer Übertragungsfunktion der Störvibration auf den Druckausgleichsverlauf bzw. die Membranschwingung ermittelt.

Der Beschleunigungssensor, welcher an der Gaskonzentrationsmessvorrichtung oder dem Detektor angeordnet ist, vermag lediglich die Störvibration zu erkennen. Die Wirkung der Störvibration auf die Membran bzw. auf den Druckausgleich ergibt sich allerdings beispielsweise aus dem Aufbau und der materiellen Beschaffenheit der Gaskonzentrationsmessvorrichtung bzw. des Detektors, so dass die Störvibration nicht der Störschwingung entspricht, sondern die Störvibration auf die Membranschwingung bzw. den Druckausgleich eine Wirkung ausübt, wobei eben diese Wirkung sich mittels einer Übertragungsfunktion der Störvibration auf die Membran ermitteln lässt.

Nach dem Erkennen der Störschwingung als Bestandteil der Membranschwingung wird die Störschwingung extrahiert oder unterdrückt bzw. entfernt, so dass ein verbleibender Messwert des Verlaufs der Membranschwingung von der Störschwingung befreit oder deren Einfluss reduziert ist und lediglich eine Nutzschwingung darstellt, so dass das Ergebnis von einem extern verursachten Störsignal bzw. einem Messfehler befreit oder reduziert ist und die Gaskonzentration in dem Gasgemisch zuverlässig und fehlerfrei wiedergibt.

Die Übertragungsfunktion der Störvibration auf die Membranschwingung kann dabei beispielsweise vor einer Inbetriebnahme oder während eines Betriebes der Gaskonzentrationsmessvorrichtung erfolgen.

Vor der Inbetriebnahme der Gaskonzentrationsmessvorrichtung kann die Übertragungsfunktion beispielsweise dadurch ermittelt werden, dass die Gaskonzentrationsmessvorrichtung mit einem bekannten Störsignal beaufschlagt wird und anschließend sowohl die Störvibration als auch die Membranschwingung erfasst werden. Mittels der erfassten Störvibration und der erfassten Membranschwingung kann dann die Übertragungsfunktion der Störvibration auf die Membranschwingung ermittelt werden, da die Membranschwingung in diesem Fall, d. h. **vor der Inbetriebnahme der** Gaskonzentrationsmessvorrichtung, keine Nutzschwingung, d. h. keine Schwingung aufgrund von Druckänderung des Detektorgases in der ersten Detektorkammer und der zweiten Detektorkammer, aufweist.

Ebenso kann eine Gaskonzentrationsmessvorrichtung mit irgendeinem Störsignal beaufschlagt werden, wobei in diesem Fall der Beschleunigungssensor die Störvibration an dem Detektor erfasst und die Membranschwingung das Störsignal darstellt. Damit kann aus dem Störsignal und der Störvibration die Übertragungsfunktion berechnet werden.

Während der Betriebszeit kann die Übertragungsfunktion beispielsweise ermittelt werden, indem zwei Gaskonzentrationsmessvorrichtungen örtlich nebeneinander platziert werden, wobei eine von den beiden Gaskonzentrationsmessvorrichtungen im komplett abgeblendeten Zustand betrieben wird, d. h. dass die abgeblendete Gaskonzentrationsmessvorrichtung keine Druckänderung des Detektorgases aufweist und die Membranschwingung in diesem Fall lediglich aus einer Störschwingung besteht, welche von dem externen Störsignal bzw. der Störvibration verursacht wird. Damit kann an der abgeblendet betriebenen Gaskonzentrationsmessvorrichtung die Übertragungsfunktion der Störvibration auf die Membranschwingung ermittelt werden und anschließend kann diese Übertragungs funktion an der anderen Gaskonzentrationsmessvorrichtung, deren Membranschwingung aus Nutzschwingung und Störschwingung besteht, so zur Anwendung kommen, dass die Störschwingung aus der Membranschwingung herausgerechnet werden kann.

Die Übertragungsfunktion der Störvibration auf die Membranschwingung kann für eine einzelne Gaskonzentrationsmessvorrichtung individuell ermittelt werden, es kann aber auch eine generische Übertragungsfunktion ermittelt werden, indem eine Mehrzahl von Gaskonzentrationsmessvorrichtungen auf ihr Übertragungsverhalten der Störvibration auf die Membranschwingung hin untersucht werden und eine gemittelte Übertragungsfunktion ermittelt wird, wobei die gemittelte bzw. generische Übertragungsfunktion dann für sämtliche baugleichen Gaskonzentrationsmessvorrichtungen herangezogen wird. Zur Bestimmung der generischen Übertragungsfunktion können beispielsweise die Mittelwertbildung, der Median oder weitere gültige Funktionen herangezogen werden.

Gemäß einer weiteren Ausführungsform der Erfindung ist der Beschleunigungssensor ausgeführt, ein Frequenzspektrum des Störsignals zu erfassen. Dabei ist die Gaskonzentrationsmessvorrichtung ausgeführt, eine Nutzfrequenz des Druckausgleichs bzw. der Membranschwingung so anzupassen, dass die Nutzfrequenz einen bestimmten Frequenzabstand von einer Frequenz des Störsignals aufweist. Beispielsweise kann die Nutzfrequenz so angepasst werden, dass diese eine solchen Frequenzwert aufweist, welcher nicht von einer Störfrequenz überlagert wird.

Der Beschleunigungssensor kann auch so ausgestaltet sein, dass er eine einzelne Frequenz des Störsignals erfasst, beispielsweise 6 Hz. Findet sich auf dieser Frequenz kein Störsignal, so kann die Nutzfrequenz auf die genannten 6 Hz eingestellt werden, andernfalls ist eine alternative Nutzfrequenz einzustellen, wobei diese einen gewissen Frequenzabstand von beispielsweise 3 Hz von den 6 Hz aufweist und dann 9 Hz betragen könnte.

Die Nutzfrequenz des Druckausgleichs bzw. des Druckausgleichsverlaufs zwischen der ersten Detektorkammer und der zweiten Detektorkammer entspricht dabei dem abwechselnden wechselseitigen Abblenden der Referenzkammer und der Messkammer, da eine Druckveränderung des Detektorgases darauf zurückzuführen ist, dass das Maß an Energie, welches bei dem Detektorgas durch die Messkammer bzw. die Referenzkammer ankommt, sich in Abhängigkeit der Konzentration des zu messenden gasförmigen Stoffes in dem Gasgemisch verändert.

Der Druckausgleichsverlauf bzw. die Membranschwingung kann dabei im Zeitbereich erfasst werden und der Signalverlauf im Zeitbereich in seine Bestandteile in den Frequenzbereich übertragen werden, d. h. dass das Frequenzspektrum des Druckausgleichsverlaufs bzw. der Membranschwingung ermittelt wird.

Ist die Nutzfrequenz der Membranschwingung bekannt, so kann beispielsweise ein Signal auf einer von der Nutzfrequenz abweichenden Frequenz aus der Membranschwingung mittels eines Signalfilters, wie z. B. eines Bandpasses, gefiltert werden, so dass ein Störsignal, dessen Frequenz von der Nutzfrequenz abweicht, aus dem gemessenen Signal der Membranschwingung extrahiert werden kann.

Die Nutzfrequenz kann sich in einem bevorzugten Frequenzbereich von 4 Hz bis 15 Hz befinden. Liegt an der Gaskonzentrationsmessvorrichtung ein Störsignal auf einer einzelnen Frequenz, beispielsweise 13 Hz, an, so kann die Nutzfrequenz dahingehend angepasst werden, dass die Nutzschwingung der Membranschwingung bei einem hinreichenden Frequenzabstand von den oben genannten 13 Hz des Störsignals liegt, beispielsweise mit einem Abstand von 5 Hz läge dann die Nutzschwingung bei 8 Hz.

Damit ist es möglich, die aus diesen beiden verschiedenen Signalen zusammengesetzte Membranschwingung in ihrem Frequenzspektrum zu unterscheiden und für die weitere Verarbeitung lediglich die Messwerte heranzuziehen, welche auf der Nutzfrequenz der Nutzschwingung liegen, unter Vernachlässigung bzw. Verwerfung der Signale, welche auf der Frequenz des Störsignals liegen.

D**ie** Nutzfrequenz kann dabei dadurch angepasst werden, dass die Abblendgeschwindigkeit von Referenzkammer und Messkammer angepasst wird.

Ein Störsignal auf einer einzelnen Frequenz kann sich beispielsweise im Umfeld eines Antriebs eines Fahrzeugs, beispielsweise eines Motors, ergeben, wenn der Motor mit einer bestimmten Drehzahl betrieben wird, so dass sich die Schwingungen des Motors auf das Fahrzeug übertragen und von dort als Störsignal auf die Gaskonzentrationsmessvorrichtung einwirken.

Gemäß einer weiteren Ausführungsform der Erfindung ist die Auswerteeinheit ausgeführt, die Membranschwingung mittels dem Prinzip der Mikrofonie zu erfassen.

Gemäß einem weiteren Aspekt der Erfindung ist ein Verfahren zum Messen einer Gaskonzentration eines Gases in einem Gasgemisch angegeben, das Verfahren aufweisend die Schritte: Anregen eines Detektorgases in einer ersten Detektorkammer und einer zweiten Detektorkammer in einem ersten Schritt, wobei das Detektorgas in der ersten Detektorkammer einen ersten Druck einnimmt, welcher erste Druck von einem zweiten Druck des Detektorgases in der zweiten Detektorkammer abweicht; Ermitteln eines Druckausgleichsverlaufs zwischen der ersten Detektorkammer und der zweiten Detektorkammer in einem zweiten Schritt; Ermitteln einer Störschwingung, welche in dem Druckausgleichsverlauf enthalten ist, in einem dritten Schritt; Entfernen der Störschwingung aus dem Druckausgleichsverlauf in einem vierten Schritt, so dass sich eine Nutzschwingung des Druckausgleichsverlaufs ergibt, welche Nutzschwingung ein Indikator für die Gaskonzentration des Gases in dem Gasgemisch ist.

Gemäß einer Ausführungsform der Erfindung ist die erste Detektorkammer von der zweiten Detektorkammer mittels einer Membran getrennt, wobei in dem ersten Schritt beim Anregen des Detektorgases in der ersten Kammer und in der zweiten Kammer der Druck des Detektorgases variiert und der daraus resultierende Druckausgleichsverlauf eine Membranschwingung verursacht" **wobei die Membranschwingung dem** Druckausgleichsverlauf entspricht. Dabei wird **im zweiten Schritt die** Membranschwingung ermittelt, im dritten Schritt wird die Störschwingung, welche in der Membranschwingung enthalten ist, ermittelt, und im vierten Schritt wird die Störschwingung von der Membranschwingung entfernt, so dass sich die Nutzschwingung der Membran ergibt, welche Nutzschwingung ein Indikator für die Gaskonzentration des Gases in dem Gasgemisch ist.

Damit ist ein Verfahren zum Entfernen einer Störschwingung von einer Membranschwingung einer Membran in einem Detektor einer Gaskonzentrationsmessvorrichtung angegeben.

Die Ermittlung der Störschwingung im dritten Schritt kann die Ermittlung der Frequenz, der Amplitude, der Phase, d. h. insgesamt des Einflusses der Störvibration auf die Membranschwingung, also der Störschwingung, beinhalten.

Gemäß einer weiteren Ausführungsform wird in einem dem ersten Schritt vorgelagerten Schritt eine Übertragungsfunktion einer Störvibration, welche von einem Störsignal an der Gaskonzentrationsmessvorrichtung hervorgerufen wird, auf den Druckausgleichsverlauf bzw. die Membranschwingung ermittelt, wobei ein Einfluss des Störsignals auf den Druckausgleichsverlauf bzw. die Membranschwingung der Störschwingung entspricht.

Das Störsignal wirkt also mittelbar auf die Störschwingung des Druckausgleichsverlaufs bzw. der Membranschwingung, indem das Störsignal eine Störvibration der Gaskonzentrationsmessvorrichtung hervorruft, welche Störvibration wiederum ihrerseits die Störschwingung der Membranschwingung bzw. des Druckausgleichsverlaufs hervorruft.

Gemäß einer weiteren Ausführungsform der Erfindung wird die Übertragungsfunktion vor einer Inbetriebnahme der Gaskonzentrationsmessvorrichtung ermittelt, indem die Gaskonzentrationsmessvorrichtung mit einem Referenzstörsignal beaufschlagt wird und die davon verursachte Störvibration an dem Detektor sowie der Druckausgleichsverlauf bzw. die Membranschwingung erfasst werden, so dass die Übertragungsfunktion der Störvibration auf die Störschwingung berechnet werden kann.

Die Störvibration kann selbstverständlich an der Gaskonzentrationsmessvorrichtung an einer beliebigen Stelle oder explizit an dem Detektor erfasst werden.

Das Ermitteln der Übertragungsfunktion vor der Inbetriebnahme kann insbesondere daher vorteilhaft sein, dass die Übertragungsfunktion für jede Gaskonzentrationsmessvorrichtung individuell bestimmt werden kann, was zu einer höheren Güte der Messungen während einer Betriebszeit der Gaskonzentrationsmessvorrichtung führen kann.

Gemäß einer weiteren Ausführungsform der Erfindung wird die Übertragungsfunktion während eines Betriebs der Gaskonzentrationsmessvorrichtung ermittelt, indem die Störvibration und die entsprechende Übertragung des Störsignals bzw. der Störvibration auf den Druckausgleich bzw. die Membranschwingung erfasst werden. Dabei wird die Übertragungsfunktion durch Interpolation der Parameter der Übertragungsfunktion ermittelt.

Unter dem Begriff Interpolation ist insbesondere zu verstehen, dass die Ermittlung der Übertragungsfunktion durch eine Schätzung bzw. Interpolation von Funktionsparametern und nicht des Funktionswertes erfolgt, da keine messfehlerfreie Daten auf der Nutzfrequenz zu erhalten sind, wenn die Störfrequenz der Nutzfrequenz entspricht. Insbesondere kann die Ermittlung der Funktionsparameter im Zeitbereich erfolgen, indem ein aktueller Messwert als eine lineare oder nicht-lineare Funktion vergangener Eingabe-und Ausgabewerte betrachtet wird. Die Übertragungsfunktion kann beispielsweise mit dem Auto Regressive Exogenous (ARX) - Verfahren ermittelt werden. Hierbei wird im Zeitbereich eines erfassten Signals der aktuelle Ausgabewert als linear abhängig von vergangenen Eingabe- und Ausgabewerten betrachtet. ARX bietet Möglichkeiten, die Funktionsparameter zu schätzen, so dass die Übertragungsfunktion hieraus implizit geschätzt werden kann.

Da die Nutzfrequenz der Membranschwingung bzw. des Druckausgleichsverlaufs aufgrund der bekannten Abblendungsgeschwindigkeit bekannt ist, ist ebenso bekannt, dass bei Frequenzen der Störvibration, welche von der Nutzfrequenz abweichen, eine Störschwingung nicht auftritt bzw. die Nutzschwingung auf der Nutzfrequenz nicht beeinflusst bzw. mit Mitteln der Signalverarbeitung aus der Membranschwingung gefiltert werden kann.

Damit kann eine Übertragungsfunktion auf einer Frequenz, welche von der Nutzfrequenz abweicht, ermittelt werden und diese Übertragungsfunktion entweder als Annäherung über den gesamten Frequenzbereich als gleichbleibend angenommen werden und für die Berechnung der Störschwingung auf der Frequenz der Nutzschwingung herangezogen werden oder aber es werden auf mehreren Frequenzen, welche von der Nutzfrequenz abweichen, jeweils eine Übertragungsfunktion berechnet und die Übertragungsfunktion auf der Nutzfrequenz durch Interpolation mittels der bekannten bzw. errechneten Übertragungsfunktionen ermittelt.

Die Störvibration und die Störschwingung kann beispielsweise bei einer Nutzfrequenz von 9 Hz auf einer ersten Störfrequenz von 5 Hz und einer zweiten Störfrequenz von 15 Hz ermittelt werden. Nach Ermittlung der Übertragungsfunktion der Störvibration auf die Membranschwingung bei der ersten Störfrequenz und bei der zweiten Störfrequenz kann auf die Übertragungsfunktion bei der zwischen den Störfrequenzen liegenden Nutzfrequenz interpoliert werden.

Die Membranschwingung muss auf jeden Fall für die Nutzfrequenz bestimmt werden, woraus sich ergibt, dass zumindest eine der Frequenzen, auf der die Übertragungsfunktion, d. h. die Störvibration und die Membranschwingung, ermittelt wird, der Nutzfrequenz entspricht. Im Umkehrschluss muss zumindest eine der Frequenzen, auf der die Membranschwingung und die Störvibration gemessen werden, von der Nutzfrequenz abweichen, um zur Berechnung der Übertragungsfunktion eine Störschwingung in der Membranschwingung zu messen, welche keine Nutzschwingung enthält.

Gemäß einer weiteren Ausführungsform der Erfindung wird die Störvibration der Gaskonzentrationsmessvorrichtung mittels eines Beschleunigungssensors erfasst, welcher Beschleunigungssensor an der Gaskonzentrationsmessvorrichtung angebracht ist.

Wie weiter oben bereits dargelegt, kann der Beschleunigungssensor insbesondere auch an dem Detektor der Gaskonzentrationsmessvorrichtung angebracht sein, und insbesondere örtlich in der Nähe der Membran bzw. der Strömungsöffnung zwischen der ersten Detektorkammer und der zweiten Detektorkammer.

Gemäß einer weiteren Ausführungsform der Erfindung wird die Störschwingung ermittelt, indem der Druckausgleichsverlauf mit zumindest drei verschiedenen Frequenzen erzeugt wird, wobei die aus den verschiedenen Frequenzen resultierenden Druckausgleichsverläufe miteinander verglichen werden und die Störschwingung auf derjenigen Frequenz identifiziert wird, deren zugehöriger Druckausgleichsverlauf von den anderen Frequenzen des Druckausgleichsverlaufs abweicht.

Diese Herangehensweise kann insbesondere vorteilhaft sein, wenn das Störsignal bzw. die Störvibration auf einer einzelnen Frequenz liegt. In diesem Fall könnte das Störsignal lediglich eine einzelne Nutzschwingung der Membranschwingung verfälschen, deren Nutzfrequenz identisch mit der Frequenz des Störsignals ist. Neben diesem einen Messwert liegen noch wenigstens Messwerte von zwei weiteren Nutzfrequenzen vor und die gestörte Nutzfrequenz kann dadurch identifiziert werden, dass der Messwert auf der gestörten Nutzfrequenz von den Messwerten auf den anderen beiden nicht gestörten Nutzfrequenzen abweicht, weil die Messwerte auf den nicht gestörten Nutzfrequenzen gleich sind.

Die voneinander abweichenden Nutzfrequenzen der Membranschwingung können beispielsweise nacheinander erzeugt werden, indem die Geschwindigkeit des wechselseitigen Abblendens der Messkammer und der Referenzkammer verändert wird.

Gemäß einer weiteren Ausführungsform der Erfindung werden die Frequenzen der Nutzschwingung, d. h. die Nutzfrequenzen, erzeugt, indem eine Antriebseinrichtung einen Zerhacker mit einer jeweils den Nutzschwingungsfrequenzen entsprechenden Drehzahl antreibt.

Bei dem Zerhacker kann es sich beispielsweise um ein Blendenrad handeln, welches zwei konzentrische Bahnen aufweist und jeweils eine Bahn ausgeführt ist, die Bestrahlung der Referenzkammer bzw. der Messkammer zu steuern, wobei die konzentrischen Bahnen ausgeführt sind, dass die Messkammer und die Referenzkammer abwechselnd bestrahlt werden, wenn das Blendenrad rotiert.

Gemäß einer weiteren Ausführungsform der Erfindung weist der Zerhacker bzw. das Blendenrad eine Mehrzahl von Abblendungsbereichen auf, welche so ausgeführt sind, dass der Zerhacker bei einer gleichbleibenden Rotationsgeschwindigkeit des Zerhackers in dem Detektor Nutzschwingungen des Druckausgleichs von unterschiedlicher Frequenz nacheinander hervorruft.

Das Hervorrufen unterschiedlicher Nutzschwingungsfrequenzen in dem Druckausgleich kann beispielsweise dadurch erfolgen, dass die Abblendungsbereiche auf der ersten konzentrischen Bahn und der zweiten konzentrischen Bahn nicht eine gleichmäßige Länge bzw. eine ungleichmäßige Länge aufweisen, so dass die Beleuchtungsdauer bzw. Durchstrahlungsdauer der Referenzkammer und der Messkammer unterschiedlich lang sind, was zu einem in seiner Frequenz wechselnden Druckausgleichsverlauf zwischen der ersten Detektorkammer und der zweiten Detektorkammer führt, weil die Detektorkammern der Bestrahlung über die Messkammer und über die Referenzkammer unterschiedlich langen Zeiträumen ausgesetzt sind.

Dieser Aufbau des Blendenrades bzw. des Zerhackers ermöglicht, dass verschiedene Nutzfrequenzen im Druckausgleichsverlauf vorliegen, so dass Störsignale auf einzelnen Frequenzen ohne Veränderung der Drehzahl des Blendenrades erkannt werden können.

Gemäß einer weiteren Ausführungsform der Erfindung ist zumindest eine der Frequenzen der Nutzschwingungen 0 Hz.

Dies bedeutet, dass während einer gewissen Zeitspanne die Membran nicht schwingt bzw. zwischen den Detektorkammern kein Druckausgleich stattfindet, welcher durch die Bestrahlung der Infrarotlichtquelle verursacht wird. In diesem Falle könnte also ein extern anliegendes Störsignal schon allein dadurch erkannt werden, dass die Membran schwingt bzw. dass ein Druckausgleich stattfindet, obwohl die Membranschwingung bzw. der Druckausgleich nicht von einer Infrarotlichtquelle verursacht ist.

In anderen Worten bedeutet dies, dass bei einer Nutzfrequenz von 0 Hz die Membran nicht schwingen dürfte. Tut sie es dennoch, kann diese Schwingung lediglich von dem extern anliegenden Störsignal bzw. der Störvibration verursacht sein.

Damit kann der Einfluss des Störsignals auf die Membranschwingung ermittelt werden und kann so in einem darauffolgenden Messzyklus von der Membranschwingung als Störschwingung abgezogen werden.

Als Messzyklus wird dabei eine Umdrehung des Blendenrades bezeichnet, da das Blendenrad mit jeder Umdrehung bei gleichbleibender Rotationsgeschwindigkeit eine gleiche bzw. wiederkehrende Beleuchtung der Messkammer und der Referenzkammer verursacht.

Das Vorgehen, den Detektor nacheinander verschiedenen Nutzfrequenzen auszusetzen, wobei eine dieser Nutzfrequenzen 0 Hz beträgt, ermöglicht ein aktuelles Erfassen des Störsignals bzw. dessen Einfluss auf die Membranschwingung, so dass dieser Einfluss durch die ständige aktualisierte Erfassung immer wieder von der Membranschwingung bzw. dem Druckausgleichsverlauf abgezogen werden kann.

Gemäß einer weiteren Ausführungsform der Erfindung wird das Detektorgas in der ersten Detektorkammer und in der zweiten Detektorkammer mittels Bestrahlen mit Infrarotlicht angeregt.

Im Folgenden werden mit Verweis auf die Figuren Ausführungsbeispiele der Erfindung beschrieben. Die Darstellungen sind schematisch und nicht maßstabsgetreu.

### KURZE BESCHREIBUNG DER FIGURGEN

Fig. 1A zeigt eine Gaskonzentrationsmessvorrichtung gemäß einem Ausführungsbeispiel der Erfindung.
Fig. 1B zeigt einen Zerhacker für eine Gaskonzentrationsmessvorrichtung gemäß einem Ausführungsbeispiel der Erfindung.
Fig. 1C zeigt eine Gaskonzentrationsmessvorrichtung gemäß einem weiteren Ausführungsbeispiel der Erfindung.
Fig. 1D zeigt eine Gaskonzentrationsmessvorrichtung gemäß einem weiteren Ausführungsbeispiel der Erfindung.
Fig. 2 zeigt eine schematische Ansicht der Bestimmung der Übertragungsfunktion der Störvibration auf die Membranschwingung gemäß einem Ausführungsbeispiel der Erfindung.
Fig. 3 zeigt eine schematische Ansicht der Entfernung der Störschwingung von der Membranschwingung gemäß einem Ausführungsbeispiel der Erfindung.
Fig. 4 zeigt einen Zerhacker zur Erzeugung verschiedener Nutzfrequenzen gemäß einem Ausführungsbeispiel der Erfindung.
Fig. 5A zeigt einen Membranschwingungsverlauf verursacht durch einen Zerhacker gemäß Fig. 1B.
Fig. 5B zeigt einen Membranschwingungsverlauf verursacht durch einen modifizierten Zerhacker gemäß Fig. 4.
Fig. 6 zeigt eine schematische Ansicht eines Verfahrens zum Messen einer Gaskonzentration eines Gases in einem Gasgemisch gemäß einem Ausführungsbeispiel der Erfindung.

### DETAILLIERTE BESCHREIBUNG VON AUSFÜHRUNGSBEISPIELEN

Werden in der folgenden Figurenbeschreibung gleiche Bezugsziffern verwendet, so betreffen diese gleiche oder ähnliche Elemente.

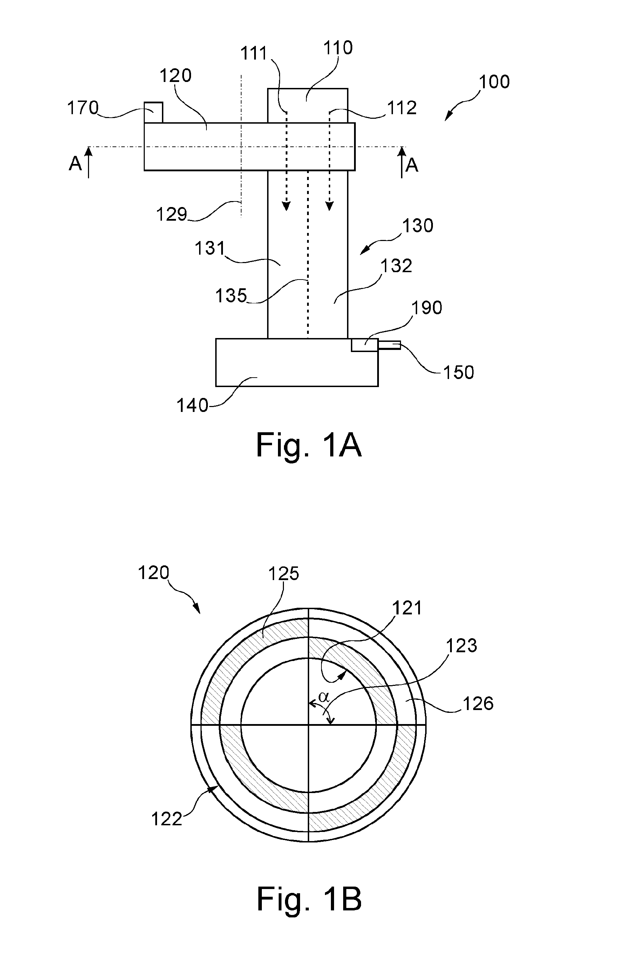

Fig. 1A zeigt eine Gaskonzentrationsmessvorrichtung 100 mit einer Infrarotlichtquelle 110, einem Zerhacker 120, einer Messstrecke 130 und einem Detektor 140.

Der Zerhacker 120 wird von einer Antriebseinrichtung 170, beispielsweise einem Motor, angetrieben, so dass die Infrarotlichtquelle 110 eine Referenzkammer 131 und eine Messkammer 132 der Messstrecke 130 jeweils abwechselnd beleuchtet bzw. jeweils eine Kammer der Referenzkammer oder der Messkammer so abgeblendet sind, dass die Infrarotlichtquelle 110 in jeweils eine der Kammern (Referenzkammer, Messkammer) kein Infrarotlicht hineinstrahlt. Die Bestrahlung der Referenzkammer und der Messkammer durch die Infrarotlichtquelle wird angedeutet durch die Pfeile 111 und 112.

Auf der Messstrecke 130 wird die Referenzkammer 131 von der Messkammer 132 mittels einer Trennwand 135 getrennt.

Treibt der Motor 170 den Zerhacker 120 an, so führt der Zerhacker eine Rotationsbewegung um die Drehachse 129 aus und blendet die Referenzkammer und die Messkammer abwechselnd ab.

An dem Detektor 140 ist ein Beschleunigungssensor 150 angebracht und eine Auswerteeinheit 190.

Der Beschleunigungssensor 150 ist ausgeführt, eine Störvibration, welche an dem Detektor von einer extern anliegenden Störung bzw. einem Störsignal hervorgerufen wird, zu erfassen. Damit wird ermöglicht, den Einfluss des Störsignals auf ein Messsignal in dem Detektor zu ermitteln und das Störsignal bzw. den Einfluss des Störsignals, d. h. die Störschwingung, aus einem Messsignal zu extrahieren.

Das abwechselnde Bestrahlen des Detektors durch die Infrarotlichtquelle über die Referenzkammer und/oder die Messkammer führt dazu, dass in Abhängigkeit der absorbierten Energie von dem Referenzgas in der Referenzkammer bzw. von dem Messgas in der Messkammer ein unterschiedlich energiehaltiges Licht bei dem Detektor ankommt. Beispielsweise kann das Referenzgas in der Referenzkammer weniger Infrarotlicht absorbieren als das Messgas in der Messkammer. Diese unterschiedliche Energieabsorption in der Referenzkammer und in der Messkammer kann in dem Detektor erfasst werden und ermöglicht einen Rückschluss auf die Konzentration eines Gases bzw. eines gasförmigen Stoffes in dem Messgas in der Messkammer.

Fig. 1B zeigt einen Zerhacker 120 mit einer ersten konzentrischen Bahn 121 und einer zweiten konzentrischen Bahn 122. Beide konzentrischen Bahnen weisen jeweils zwei Abblendungsbereiche 125 und jeweils zwei Durchlassbereiche 126 auf.

Die erste konzentrische Bahn 121 ist ausgeführt, die Referenzkammer 131 der Messstrecke abzublenden bzw. Strahlung durchzulassen, wobei die zweite konzentrische Bahn 122 ausgeführt ist, die Messkammer 132 der Messstrecke 130 abzublenden bzw. Infrarotlicht in die Messkammer durchzulassen. Dabei sind die konzentrischen Bahnen so zueinander angeordnet, dass der Abblendungsbereich der ersten konzentrischen Bahn dem Durchlassbereich der zweiten konzentrischen Bahn entspricht und umgekehrt.

Die Länge eines Abblendungsbereiches bzw. eines Durchlassbereiches kann mit Hilfe des Öffnungswinkels α 123 angegeben werden.

Wird der Zerhacker 120 mittels des Motors 170 mit einer Drehzahl beaufschlagt und rotiert um die Drehachse 129, so werden Referenzkammer 131 und Messkammer 132 abwechselnd von der Infrarotlichtquelle 110 bestrahlt und führen damit zu einer Druckschwankung in einem Detektorgas in dem Detektor 140, da in der Referenzkammer und in der Messkammer unterschiedlich viel Energie aus der Infrarotlichtstrahlung absorbiert werden. Die Frequenz der Druckschwankung des Detektorgases in dem Detektor ist damit proportional zu der Umdrehungsgeschwindigkeit des Zerhackers 120.

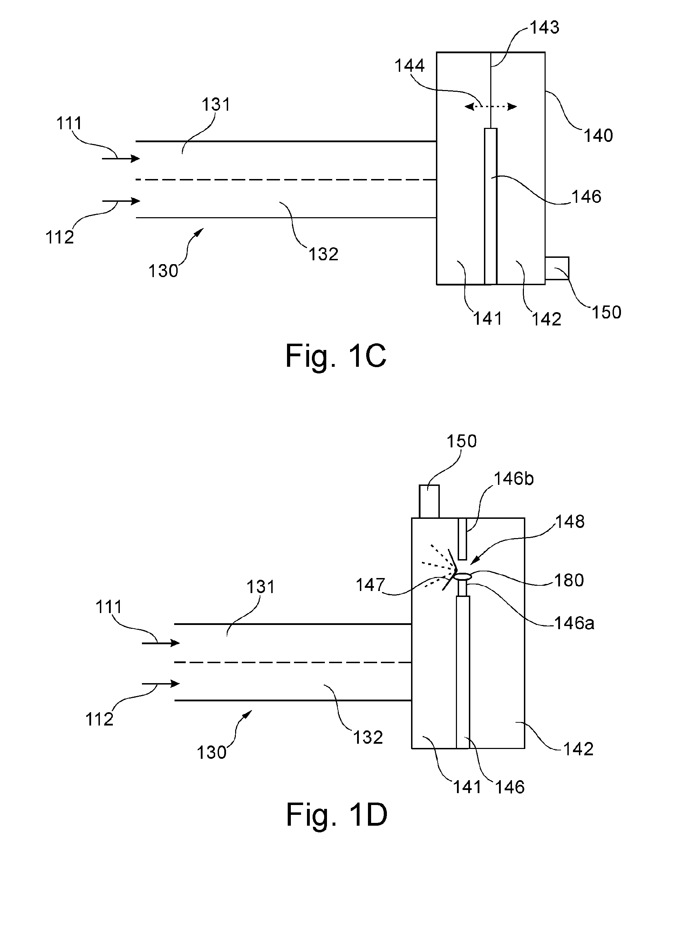

Fig. 1C zeigt eine Detailansicht der Messstrecke 130 und des Detektors 140.

Die Messstrecke 130 weist die Referenzkammer 131 auf, welche von der Messkammer 132 getrennt ist und welche abwechselnd von Infrarotlichtstrahlung, angedeutet durch die Pfeile 111, 112, durchstrahlt werden.

Die Infrarotstrahlung trifft im Anschluss an die Messstrecke auf den Detektor 140 und bestrahlt ein Detektorgas in einer ersten Detektorkammer 141 und einer zweiten Detektorkammer 142. Dabei durchläuft die Infrarotstrahlung die erste Detektorkammer und die zweite Detektorkammer nacheinander. Daher wird in der ersten Detektorkammer 141 ein höheres Maß an Energie aus der Infrarotstrahlung absorbiert als in der zweiten Detektorkammer 142, was zu einer Temperatur- und Druckerhöhung des Detektorgases in der ersten Detektorkammer 141 im Vergleich zu dem Detektorgas in der zweiten Detektorkammer 142 führt. Durch diese wiederkehrende Druckerhöhung und Druckabsenkung bzw. Druckschwankung wird eine Membran 143 zum Schwingen angeregt, wie dies durch den Pfeil 144 angedeutet ist. Das Schwingen der Membran 143 bzw. die Schwankung des Drucks in der ersten Detektorkammer 141 und in der zweiten Detektorkammer 142 ergibt sich daraus, dass die Infrarotstrahlung abwechselnd die Referenzkamme 131 und die Messkammer 132 passiert, wobei von dem Referenzgas in der Referenzkammer 131 und dem Messgas in der Messkammer 132 ein unterschiedliches Maß an Energie aus der Infrarotstrahlung absorbiert werden, so dass die in dem Detektor 140 ankommende energetische Strahlung im gleichen Maße schwankt, woraus sich ergibt, dass in den Detektorkammern 141, 142 die Temperatur bzw. der Druck des Detektorgases ebenfalls Schwankungen ausgesetzt ist.

Die Schwingungen der Membran 143 sind somit ein Maß für das unterschiedliche Maß an absorbierter Energie in der Referenzkammer 131 und der Messkammer 132, und damit mittelbar ein Maß für die Konzentration eines gasförmigen Stoffes in dem Messgas in der Messkammer 132.

Die erste Detektorkammer 141 und die zweite Detektorkammer 142 sind durch eine für Infrarotstrahlung durchlässige Trennwand 146 voneinander getrennt, so dass die Infrarotstrahlung 111, 112 die erste Detektorkammer 141 und die zweite Detektorkammer 142 nacheinander passieren kann.

Da die Schwingung der Membran 143 ein Maß für die Konzentration des Gases bzw. eines gasförmigen Stoffes in dem Gasgemisch in der Messkammer 132 ist, ist unmittelbar aus Fig. 1C ersichtlich, dass eine extern angebrachte mechanische Schwingung an dem Detektor oder an der Gaskonzentrationsmessvorrichtung zu einer Störung der Membranschwingung führen kann, was eine Verfälschung des Messergebnisses nach sich ziehen würde.

Daher ist an dem Detektor 140 ein Beschleunigungssensor 150 angebracht, welcher ausgeführt ist, eine externe Störung bzw. ein Störsignal zu erfassen, so dass die Membranschwingung, welche von dem Störsignal verursacht wird, d. h. eine Störschwingung der Membran, ermittelt werden kann und von der gesamten Membranschwingung so extrahiert werden kann, dass sich lediglich die Nutzschwingung der Membran ergibt, wobei die Nutzschwingung lediglich von der Konzentration eines gasförmigen Stoffes in dem Messgas in der Messkammer 132 abhängig ist.

Da die Membranschwingung, welche von einer Druckänderung in den Detektorkammern verursacht wird, keine Vibration des Detektors an sich verursacht, ist sichergestellt, dass der Beschleunigungssensor 150 lediglich Störvibrationen des Detektors erfasst, welche durch externe Störsignale verursacht werden.

Fig. 1D zeigt eine detaillierte Ansicht einer Messstrecke 130 und eines im Vergleich zu der Fig. 1C alternativ aufgebauten Detektors 140.

Die erste Detektorkammer 141 und die zweite Detektorkammer 142 sind in Fig. 1D mittels einer Strömungsöffnung 148 voneinander getrennt. Die Strömungsöffnung befindet sich zwischen einem ersten Trennelement 146a und einem zweiten Trennelement 146b. Erhöht sich der Druck des Detektorgases in der ersten Detektorkammer 141 im Vergleich zu dem Druck des Detektorgases in der zweiten Detektorkammer 142, so strömt das Detektorgas aus der ersten Detektorkammer 141 entlang des Pfeils 147 in die zweite Detektorkammer 142. Diese Strömung ergibt sich aus einer Druckdifferenz zwischen der ersten Detektorkammer und der zweiten Detektorkammer und ist analog zu der Erläuterung in Fig. 1C ein Maß für die Konzentration eines gasförmigen Stoffes in dem Messgas in der Messkammer 132 der Messstrecke 130. Die Strömung durch die Strömungsöffnung 148 bzw. ein Druckausgleich oder Druckausgleichsverlauf ist analog zu der Schwingung der Membran 143 in Fig. 1C zu behandeln. Mittels eines Durchflussmessers 180 kann diese Ausgleichsbewegung bzw. Gasströmung zwischen der ersten Detektorkammer 141 und der zweiten Detektorkammer 142 erfasst werden und so die Gaskonzentration in der Messkammer bestimmt werden.

Ebenso wie in Fig. 1C kann eine externe Störvibration bzw. ein Störsignal, welches an dem Detektor 140 anliegt, die Gasströmung durch die Strömungsöffnung 148 beeinflussen und somit den Messwert der Gaskonzentrationsmessvorrichtung verfälschen. Zur Erfassung eines Störsignals bzw. einer Störvibration an dem Detektor ist ein Beschleunigungssensor 150 so angebracht, dass er das Störsignal bzw. die Störvibration erfassen kann, so dass ein störsignalbedingter Messfehler des Durchflussmessers aus dem gemessenen Signal herausgerechnet werden kann.

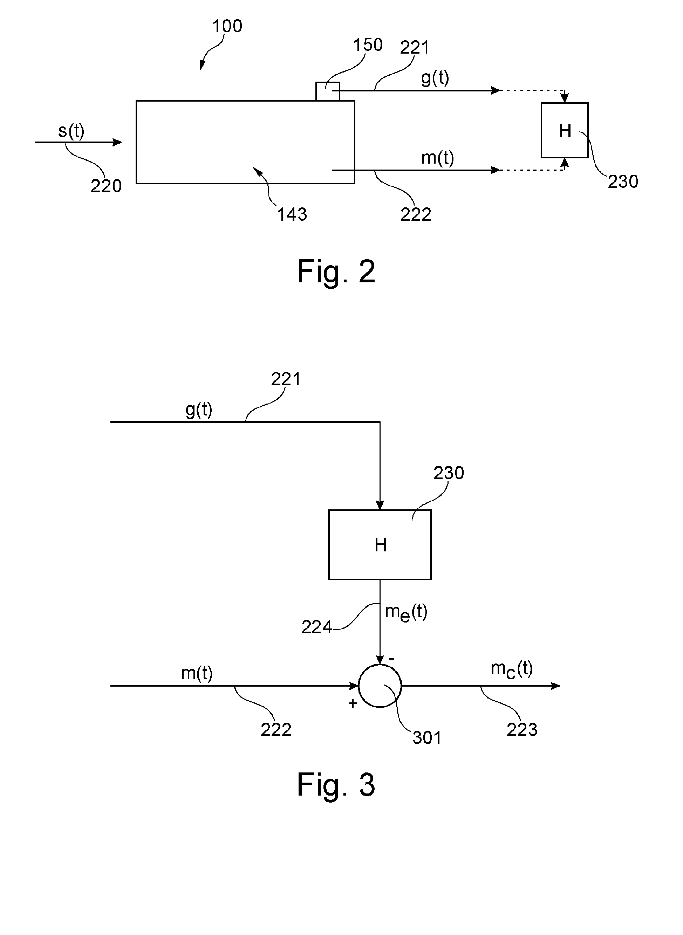

Fig. 2 zeigt eine schematische Ansicht der Bestimmung der Übertragungsfunktion H 230 zwischen einer Störvibration g(t) 221 und einer Membranschwingung m(t) 222.

Ein Störsignal s(t) 220 liegt an der Gaskonzentrationsmessvorrichtung 100 an und beeinflusst damit mittelbar die Schwingung einer Membran 143, welche sich in dem Detektor der Gaskonzentrationsmessvorrichtung 100 befindet. Zur Ermittlung der Übertragungsfunktion H 230 von der Störvibration g(t) 221 auf die Membranschwingung m(t) 222 erfasst der Beschleunigungssensor 150 die Störvibration 221, welche von dem Störsignal s(t) 220 an der Gaskonzentrationsmessvorrichtung verursacht wird, und gleichzeitig wird die Membranschwingung m(t) 222 erfasst. Damit kann mittels der Störvibration 221 und der Membranschwingung 222 die Übertragungsfunktion 230 berechnet werden.

Fig. 3 zeigt die Anwendung der Übertragungsfunktion H 230 zur Eliminierung bzw. Extrahierung der Störschwingung mₑ(t) 224 aus der Membranschwingung m(t) 222, um ein bereinigtes Messsignal bzw. die Nutzschwingung m_{c}(t) 223 zu erhalten.

Bei bekannter Übertragungsfunktion H 230 und erfasster Störvibration g(t) 221 sowie der erfassten Membranschwingung m(t) 222 kann aus der Störvibration g(t) 221 mittels der Übertragungsfunktion H 230 die Störschwingung mₑ(t) 224 der Membran errechnet werden, wobei die Störschwingung 224 anschließend mittels eines Subtrahierers 301 von der Membranschwingung abgezogen wird, so dass sich als Ergebnis des Subtraktionsvorganges die Nutzschwingung 223 ergibt, wobei die Nutzschwingung 223 das unverfälschte bzw. weitgehend unverfälschte Messsignal darstellt.

Der Subtrahierer 301 ist lediglich eine schematische Einheit zur Darstellung der Entfernung der Störschwingung aus der Membranschwingung. Selbstverständlich kann diese Operation auch durch andere mathematische Operationen erfolgen als durch eine Subtraktion, beispielsweise durch Multiplikation mit einem Faktor oder durch Anwendung einer Funktion.

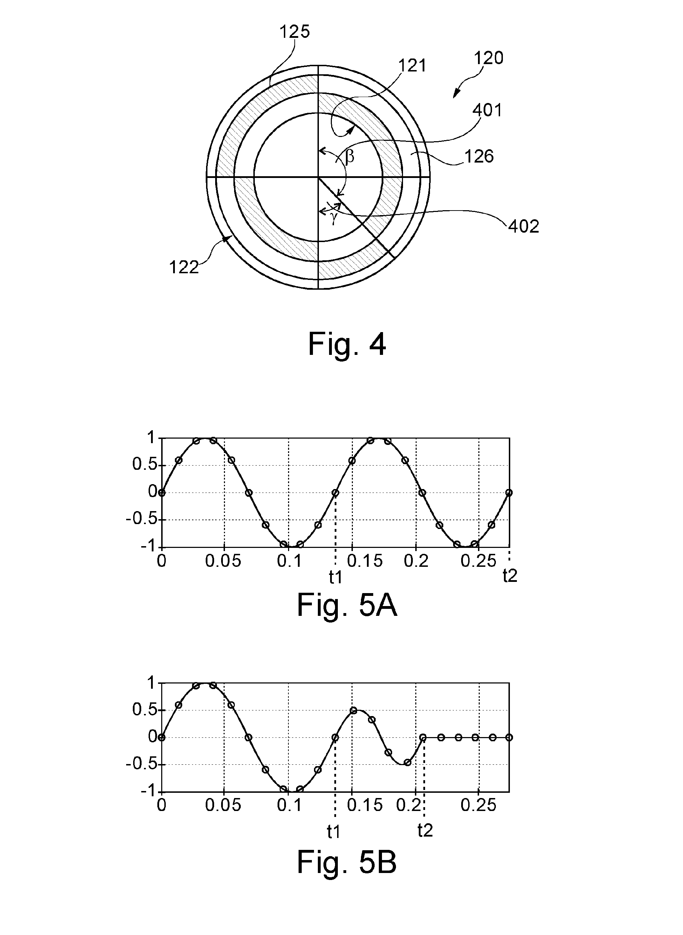

Fig. 4 zeigt einen Zerhacker 102 mit einem im Vergleich zu dem Zerhacker in Fig. 1D modifizierten Aufbau der konzentrischen Bahnen bezüglich der Durchlassbereiche und der Abblendungsbereiche.

Die erste konzentrische Bahn 121 weist einen Abblendungsbereich auf, welcher im Vergleich zu den übrigen Abblendungsbereichen eine erhöhte Länge aufweist. Im Gegenzug dazu weist die zweite konzentrische Bahn 122 einen verlängerten Durchlassbereich 126 auf, welcher verlängerte Durchlassbereich dem verlängerten Abblendungsbereich der ersten konzentrischen Bahn entspricht.

Der verlängerte Abblendungsbereich der ersten konzentrischen Bahn und der verlängerte Durchlassbereich der zweiten konzentrischen Bahn entsprechen einem Öffnungswinkel β 401.

Der vergrößerte Öffnungswinkel β 401 führt dazu, dass ein Öffnungswinkel γ 402 benachbarter Abblendungs- bzw. Durchlassbereiche auf der ersten konzentrischen Bahn und auf der zweiten konzentrischen Bahn angepasst werden muss, und zwar so, dass der Öffnungswinkel γ 402 so reduziert wird, dass die Erweiterung des Öffnungswinkels β 401 kompensiert wird.

Ein Zerhacker 102 bzw. ein Blendenrad mit einer wie oben beschriebenen modifizierten Geometrie bzw. mit einem modifizierten Aufbau hinsichtlich der Umfangslänge der Abblendungsbereiche und der Durchlassbereiche auf der ersten konzentrischen Bahn und auf der zweiten konzentrischen Bahn führt dazu, dass die Bestrahlung des Detektors durch die Messkammer bzw. die Referenzkammer der Messstrecke über eine unterschiedliche Zeit bzw. Zeitspanne erfolgt. Dies wiederum führt dazu, dass das Detektorgas in der ersten Detektorkammer und in der zweiten Detektorkammer des Detektors in Abhängigkeit der Öffnungswinkel β 401 und γ 402 durch die Referenzkammer bzw. die Messkammer eine längere Zeit bzw. eine kürzere Zeit von der Infrarotlichtquelle bestrahlt werden.

Eine unterschiedliche Bestrahlung des Detektorgases durch die Referenzkammer bzw. die Messkammer führt dazu, dass das Detektorgas weniger bzw. mehr Zeit hat, Energie zu absorbieren, so dass eine Druckerhöhung in dem Detektor in unterschiedlichem Maße, d. h. in Abhängigkeit der Strahlungsenergie, erfolgt. Dies beeinflusst seinerseits einen Verlauf des Druckausgleichs zwischen der ersten Detektorkammer und der zweiten Detektorkammer bzw. die Membranschwingung zwischen der ersten Detektorkammer und der zweiten Detektorkammer aufgrund des Druckunterschieds zwischen diesen beiden Detektorkammern.

Ein modifizierter Zerhacker 120, wie dies Fig. 4 zeigt, kann dazu genutzt werden, den Druckausgleich zwischen der ersten Detektorkammer und der zweiten Detektorkammer mit unterschiedlichen Frequenzen erfolgen zu lassen. Dies bedeutet beispielsweise im Falle, dass die erste Detektorkammer von der zweiten Detektorkammer mittels einer Membran getrennt ist, dass die Membran während eines Umlaufs des Zerhackers 120 mit verschiedenen Frequenzen schwingt. Diese unterschiedlichen Schwingungsfrequenzen ermöglichen ihrerseits das Erkennen eines Störsignals bzw. der Frequenzen eines Störsignals, welches von außen auf die Gaskonzentrationsmessvorrichtung wirkt, womit wiederum das Entfernen der Auswirkungen des Störsignals auf die Membranschwingung bzw. auf den Druckausgleich erfolgen kann.

Die Fig. 5A und 5B zeigen einen Druckausgleichsverlauf zwischen der ersten Detektorkammer und der zweiten Detektorkammer bei Verwendung eines Zerhackers gemäß Fig. 1B (Druckausgleichsverlauf gezeigt in Fig. 5A) bzw. bei Verwendung eines modifizierten Zerhackers gemäß Fig. 4 (Druckausgleichsverlauf gemäß Fig. 5B).

Fig. 1B zeigt eine gleichmäßige Verteilung der Abblendungsbereiche und der Durchlassbereiche auf die erste konzentrische Bahn und die zweite konzentrische Bahn. Dies führt dazu, dass bei Bestrahlung des Detektors durch die Referenzkammer der Druck des Detektorgases ausgehend von einem Ausgangszustand im Zeitpunkt t = 0 zunächst ansteigt, da das Detektorgas Energie aus der Strahlung aufnimmt. Hat sich der Zerhacker 120 soweit gedreht, dass der Detektor durch die Messkammer bestrahlt wird und wird wiederum von dem Messgas in der Messkammer ein höheres Maß an Energie aus der Infrarotstrahlung absorbiert, so führt dies zu einer Absenkung des Druckes des Detektorgases, was beispielsweise zu einem Zurückschwingen der Membran führt. Sodann erfolgt bei erneutem Weiterdrehen des Zerhackers 120 eine Bestrahlung des Detektors durch die Referenzkammer, wobei hier ein höheres Maß an Energie durch die Strahlung bei dem Detektor ankommt, so dass der Druck in dem Detektorgas erneut zu steigen beginnt.

In Fig. 5A hat der Zerhacker zum Zeitpunkt t = t2 komplette Umdrehung ausgeführt.

Bei gleichbleibender Drehzahl des Zerhackers und bei einer gleichbleibenden chemischen Zusammensetzung des Referenzgases in der Referenzkammer und des Messgases in der Messkammer wird sich der Verlauf der Membranschwingungen nicht verändern, so dass sich ein periodischer Verlauf der Membranschwingungen, wie in Fig. 5A gezeigt, einstellt.

Der Verlauf der Schwingung zwischen den Zeitpunkten t = t1 und t = t2 entspricht gemäß dem eben Dargestellten exakt dem Verlauf zwischen dem Zeitpunkt t = 0 und t = t1.

Zur Bestimmung der Konzentration eines Stoffes, insbesondere eines gasförmigen Stoffes, in dem Gasgemisch, d. h. dem Messgas in der Messkammer, kann insbesondere die Amplitude der in Fig. 5A dargestellten Membranschwingung herangezogen werden, da die Amplitude der Membranschwingungen sich aus dem Unterschied der Energiestrahlung, welche durch die Referenzkammer bzw. die Messkammer in dem Detektor ankommt, ergibt.

Damit ergibt sich auch, dass eine Störung der Membranschwingung, beispielsweise durch ein externes Störsignal bzw. durch eine Störvibration der Gaskonzentrationsmessvorrichtung, sich unmittelbar auf die Messgenauigkeit der Gaskonzentrationsmessvorrichtung auswirkt, da es eben die Membranschwingung ist, welche ein Maß für die Konzentration eines Stoffes in dem Gasgemisch in der Messkammer ist.

Fig. 5B zeigt den Verlauf der Membranschwingung während einer Umdrehung eines Zerhackers 120 gemäß Fig. 4.

Die Membranschwingung zwischen den Zeitpunkten t = 0 und t = t1 entspricht der Membranschwingung, welche in Fig. 5A gezeigt wurde. Dieser unveränderte Signalverlauf zwischen den Zeitpunkten t = 0 und t = t1 ergibt sich daraus, dass der Zerhacker 120 in Fig. 4 in zwei Quadranten identisch aufgebaut ist wie der Zerhacker in Fig. 1B. Aufgrund der modifizierten Öffnungswinkel β 401 und γ 402 des Zerhackers 120 in Fig. 4 ergibt sich jedoch zwischen den Zeitpunkten t = t1 und t = t2 ein anderes Schwingungsverhalten der Membran als in Fig. 5A. Dieses abweichende Schwingungsverhalten der Membran ergibt sich daraus, dass das Detektorgas unterschiedliche Zeitspannen durch die Infrarotlichtquelle über die Referenzkammer bzw. über die Messkammer bestrahlt wird.

Ebenso wie die Fig. 5A zeigt auch die Fig. 5B die Membranschwingung während eines einzelnen Umlaufs des Zerhackers 120.

Fig. 5B zeigt, dass die Membran ab dem Zeitpunkt t = t2 ihre Position bis zum Ende der Umdrehung des Zerhackers nicht mehr verändert. Dies liegt daran, dass aufgrund der veränderten Öffnungswinkel β 401 und γ 402 das Detektorgas in der Detektorkammer eine längere Zeitspanne durch die Referenzkammer bzw. die Messkammer bestrahlt wird und das Detektorgas in der ersten Detektorkammer und der zweiten Detektorkammer einen Druckausgleich vollzieht, d. h. dass die Membran in der Position verbleibt, welche einem Druckausgleich zwischen der ersten Detektorkammer und der zweiten Detektorkammer entspricht.

Wie Fig. 5B zeigt, weist die Membranschwingung zwei verschiedene Frequenzen, nämlich eine erste Frequenz zwischen t = 0 und t = t1 und eine zweite Frequenz zwischen t = t1 und t = t2 auf. Damit könnte ein Störsignal, welches eine Störung auf der ersten Frequenz oder der zweiten Frequenz aufzeigt, ebenso auch höchstens die Membranschwingung auf einer einzelnen dieser Frequenzen stören. Dies bedeutet, dass auf der nicht gestörten Frequenz der Membranschwingung ein zuverlässiges messfehlerfreies Messsignal erfasst werden kann.

Weiterhin ermöglicht ein Zerhacker gemäß Fig. 4 während der druckausgleichsfreien Zeit, d. h. nach dem Zeitpunkt t = t2 in Fig. 5B und vor Beginn der nächsten Umdrehung des Zerhackers, dass ein externes Störsignal unmittelbar aus der Membranschwingung erkannt werden kann.

Es ist bekannt, dass nach dem Zeitpunkt t = t2 eine Nutzschwingung der Membran nicht stattfindet. Wird dennoch eine Membranschwingung erfasst, so kann unmittelbar darauf geschlossen werden, dass es sich bei der hier erfassten Membranschwingung lediglich um die Auswirkungen eines Störsignals bzw. eine Störvibration der Gaskonzentrationsmessvorrichtung auf die Membranschwingung handeln kann. Damit kann genau dieser Einfluss von dem Membranschwingungsverlauf zwischen dem Zeitpunkt t = 0 und t = t2 extrahiert werden.

Damit ermöglicht ein modifizierter Aufbau eines Zerhackers gemäß Fig. 4 die Bestimmung einer Störschwingung der Membran bei jedem einzelnen Umlauf des Zerhackers 120. Damit kann selbst bei einem schnell wechselnden Störsignal immer der aktuelle Einfluss des Störsignals auf die Membranschwingung erkannt werden, womit ein Messfehler bzw. eine Störschwingung der Membran aus der Membranschwingung extrahiert werden kann.

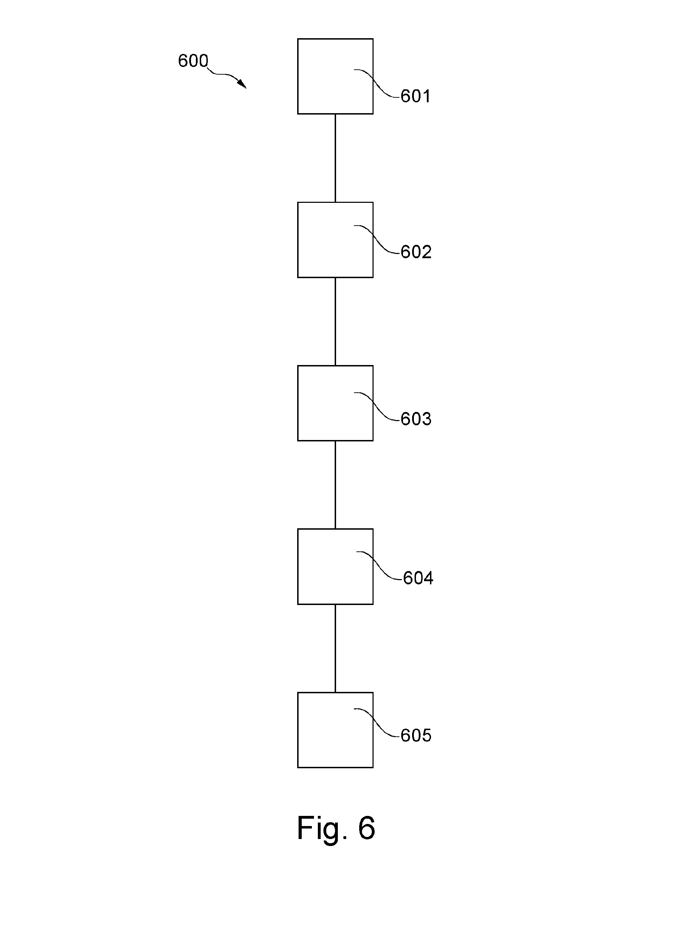

Fig. 6 zeigt eine schematische Darstellung eines Verfahrens zum Messen einer Gaskonzentration eines Gases in einem Gasgemisch.

In einem Schritt 601 des Verfahrens 600 wird eine Übertragungsfunktion einer Störvibration, welche von einem Störsignal an der Gaskonzentrationsmessvorrichtung hervorgerufen wird, auf den Druckausgleichsverlauf zwischen der ersten Detektorkammer und der zweiten Detektorkammer ermittelt.

In dem Schritt 602 wird das Detektorgas in der ersten Detektorkammer und der zweiten Detektorkammer des Detektors angeregt, d. h. durch eine Referenzkammer oder eine Messkammer einer Messstrecke mittels einer Infrarotstrahlungsquelle bestrahlt, wobei das Detektorgas aus dem Infrarotlicht Energie absorbiert und somit eine Druckerhöhung des Detektorgases erfolgt.

In einem Schritt 603 wird der Druckausgleichsverlauf zwischen der ersten Detektorkammer und der zweiten Detektorkammer ermittelt, welcher Druckausgleichsverlauf sich daraus ergibt, dass das Detektorgas in der ersten Detektorkammer ein höheres Maß an Energie aus der Infrarotstrahlung absorbiert als das Detektorgas in der zweiten Detektorkammer.

Der Druckausgleichsverlauf ist ein Maß für das unterschiedliche Maß an Infrarotstrahlung, welches durch die Referenzkammer bzw. die Messkammer zu dem Detektor bzw. dem Detektorgas gelangt, wobei sich dieser Unterschied aus der Absorption der Infrarotstrahlung durch das Referenzgas bzw. das Messgas ergibt.

In einem Schritt 604 wird eine Störschwingung, welche in dem Druckausgleichsverlauf enthalten ist, ermittelt.

Die Störschwingung ist dabei diejenige Komponente des Druckausgleichsverlaufs, welche von einem Störsignal bzw. einer Störvibration der Gaskonzentrationsmessvorrichtung hervorgerufen wird.

In einem Schritt 605 wird die Störschwingung aus dem Druckausgleichverlauf entfernt, so dass sich eine Nutzschwingung des Druckausgleichsverlaufs ergibt, welche Nutzschwingung ein Indikator für die Gaskonzentration des Gases in dem Gasgemisch ist.

Dadurch, dass die Störschwingung aus dem Druckausgleichsverlauf entfernt wird, ergibt sich, dass die Membranschwingung lediglich aus der Nutzschwingung besteht und somit ein Schwingungsverlauf bzw. ein Druckausgleichsverlauf angegeben werden kann, welcher von einem Störeinfluss befreit bzw. weitgehend befreit ist.

Ergänzend sei darauf hingewiesen, dass "umfassend" oder "aufweisend" keine anderen Elemente ausschließt und "eine" oder "in" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Gaskonzentrationsmessvorrichtung (100), aufweisend einen Detektor (140) mit einer ersten Detektorkammer (141) und einer zweiten Detektorkammer (142), wobei die erste Detektorkammer und die zweite Detektorkammer mit einem Detektorgas gefüllt sind;
wobei ein Druckausgleich auf Grund eines Druckunterschieds des Detektorgases zwischen der ersten Detektorkammer und der zweiten Detektorkammer ein Maß für eine Konzentration eines Gases in einem Gasgemisch ist;
**dadurch gekennzeichnet, dass**
die Gaskonzentrationsmessvorrichtung einen Beschleunigungssensor (150) aufweist, welcher Beschleunigungssensor ausgeführt ist, eine Störvibration (220) der Gaskonzentrationsmessvorrichtung zu erfassen;, so dass ein Druckausgleichsverlauf (222) zwischen der ersten Detektorkammer und der zweiten Detektorkammer ohne Einwirkung der Störvibration auf die Gaskonzentrationsmessvorrichtung und ohne eine von der Störvibration verursachten Störschwingung (224) ermittelt wird.

2. Gaskonzentrationsmessvorrichtung (100) nach Anspruch 1, weiterhin aufweisend eine Auswerteeinheit (190), wobei die erste Detektorkammer mittels einer Membran (143) von der zweiten Detektorkammer getrennt ist; wobei eine Membranschwingung, die sich durch eine Druckänderung des Detektorgases in der ersten Detektorkammer ergibt, von dem Druckausgleichsverlauf (222) verursacht wird und die Konzentration des Gases in dem Gasgemisch angibt, und wobei die Auswerteeinheit ausgeführt ist, den Druckausgleichsverlauf (222) zu ermitteln.

3. Gaskonzentrationsmessvorrichtung nach einem der Ansprüche 1 oder 2,
wobei der Beschleunigungssensor an dem Detektor angeordnet ist.

4. Gaskonzentrationsmessvorrichtung nach einem der Ansprüche 1 bis 3,
weiterhin aufweisend eine Auswerteeinheit (190), welche den Druckausgleichsverlauf (222) ermittelt und die Störschwingung in dem Druckausgleichsverlauf erkennt; wobei die Auswerteeinheit die Störschwingung mittels einer Übertragungsfunktion (230) der Störvibration auf den Druckausgleichsverlauf ermittelt.

5. Gaskonzentrationsmessvorrichtung nach einem der Ansprüche 1 bis 3,
wobei der Beschleunigungssensor ausgeführt ist, ein Frequenzspektrum des Störsignals zu erfassen;
wobei die Gaskonzentrationsmessvorrichtung ausgeführt ist, eine Nutzfrequenz des Druckausgleichs so anzupassen, dass die Nutzfrequenz einen bestimmten Frequenzabstand von einer Frequenz des Störsignals aufweist.

6. Gaskonzentrationsmessvorrichtung nach einem der Ansprüche 2 bis 5,
wobei die Auswerteeinheit ausgeführt ist, die Membranschwingung mittels dem Prinzip der Mikrofonie zu erfassen.

7. Verfahren (600) zum Messen einer Gaskonzentration eines Gases in einem Gasgemisch, aufweisend die Schritte:
- Anregen eines Detektorgases in einer ersten Detektorkammer (141) und einer zweiten Detektorkammer (142) in einem ersten Schritt (602), wobei das Detektorgas in der ersten Detektorkammer einen ersten Druck einnimmt, welcher von einem zweiten Druck des Detektorgases in der zweiten Detektorkammer abweicht;
- Ermitteln eines Druckausgleichsverlaufs zwischen der ersten Detektorkammer und der zweiten Detektorkammer in einem zweiten Schritt (603);
- Ermitteln einer Störschwingung (224), welche in dem Druckausgleichsverlauf enthalten ist, in einem dritten Schritt (604);
- Entfernen der Störschwingung aus dem Druckausgleichsverlauf in einem vierten Schritt (605), so dass sich eine Nutzschwingung (223) des Druckausgleichsverlaufs ergibt, welche Nutzschwingung ein Indikator für die Gaskonzentration des Gases in dem Gasgemisch ist.

8. Verfahren nach Anspruch 7, wobei die erste Detektorkammer von der zweiten Detektorkammer mittels einer Membran (143) getrennt ist, wobei:
- im ersten Schritt beim Anregen des Detektorgases in der ersten Kammer und in der zweiten Kammer der Druck des Detektorgases variiert und der daraus resultierende Druckausgleichsverlauf eine Membranschwingung verursacht.

9. Verfahren nach einem der Ansprüche 7 oder 8,
wobei in einem dem ersten Schritt (602) vorgelagerten Schritt (601) eine Übertragungsfunktion (230) einer Störvibration (221), welche von einem Störsignal (220) an der Gaskonzentrationsvorrichtung hervorgerufen wird, auf den Druckausgleichsverlauf ermittelt wird,
wobei ein Einfluss des Störsignals auf den Druckausgleichsverlauf der Störschwingung entspricht.

10. Verfahren nach Anspruch 9,
wobei die Übertragungsfunktion vor einer Inbetriebnahme der Gaskonzentrationsmessvorrichtung ermittelt wird, indem die Gaskonzentrationsmessvorrichtung mit einem Referenzstörsignal beaufschlagt wird und die davon verursachte Störvibration an dem Detektor sowie der Druckausgleichsverlauf erfasst werden, so dass die Übertragungsfunktion berechnet werden kann.

11. Verfahren nach Anspruch 9,
wobei die Übertragungsfunktion während eines Betriebs der Gaskonzentrationsmessvorrichtung ermittelt wird, indem der Druckausgleichsverlauf erfasst wird und Koeffizienten der Übertragungsfunktion mittels einer linearen oder nicht-linearen Funktion vergangener Eingabe- und Ausgabewerte des Druckausgleichsverlaufs ermittelt werden.

12. Verfahren nach einem der Ansprüche 9 bis 11,
wobei die Störvibration mittels eines Beschleunigungssensors (150) erfasst wird, welcher an der Gaskonzentrationsmessvorrichtung angebracht ist.

13. Verfahren nach Anspruch 7 oder 8,
wobei die Störschwingung ermittelt wird, indem der Druckausgleichsverlauf mit zumindest drei verschiedenen Frequenzen erzeugt wird, wobei die aus den verschiedenen Frequenzen resultierenden Druckausgleichsverläufe miteinander verglichen werden, und die Störschwingung auf derjenigen Frequenz identifiziert wird, deren zugehöriger Druckausgleichsverlauf von den anderen Frequenzen des Druckausgleichsverlaufs abweicht.

14. Verfahren nach Anspruch 13,
wobei die Frequenzen der Nutzschwingung erzeugt werden, indem eine Antriebseinrichtung (170) einen Zerhacker (120) mit einer jeweils den Nutzschwingungsfrequenzen entsprechenden Drehzahl antreibt.

15. Verfahren nach Anspruch 13,
wobei ein Zerhacker (120) eine Mehrzahl von Abblendungsbereichen (125) aufweist, welche so ausgeführt sind, dass der Zerhacker bei einer gleichbleibenden Rotationsgeschwindigkeit des Zerhackers in dem Detektor Nutzschwingungen des Druckausgleichs von unterschiedlicher Frequenz nacheinander hervorruft.

16. Verfahren nach Anspruch 15,
wobei zumindest eine der Frequenzen der Nutzschwingung 0 Hz beträgt.

17. Verfahren nach einem der Ansprüche 7 bis 16,
wobei das Detektorgas in der ersten Detektorkammer und in der zweiten Detektorkammer mittels Bestrahlen mit Infrarotlicht angeregt wird.
